# EUROPÄISCHE PATENTSCHRIFT

(11) **EP 2 852 531 B1**
(45) Veröffentlichungstag und Bekanntmachung des Hinweises auf die Patenterteilung: **16.03.2016**
(21) Anmeldenummer: 13714549.6
(22) Anmeldetag: 21.03.2013
(51) Int. Cl.: B65B 17/02, B65B 35/58, B65B 35/30, B65B 51/02, B65B 65/00, B65G 47/08, B65G 47/86, B65G 54/02

(54) **VORRICHTUNG ZUR BILDUNG VON VERPACKUNGSEINHEITEN**
DEVICE FOR FORMING PACKAGED UNITS
DISPOSITIF DE FORMATION D'UNITÉS D'EMBALLAGE

(30) Priorität: 23.05.2012 DE 102012010087
(43) Veröffentlichungstag der Anmeldung: 01.04.2015
(73) Patentinhaber: KHS GmbH, 44143 Dortmund (DE)
(72) Erfinder: NITSCH, Thomas, 47533 Kleve (Warbeyen) (DE)
(86) Internationale Anmeldenummer: PCT/EP2013/000856
(87) Internationale Veröffentlichungsnummer: WO 2013/174464

(56) Entgegenhaltungen:
- EP-A1- 2 202 159
- EP-A2- 2 258 625
- WO-A1-2013/079164
- US-B1- 7 198 070

## Beschreibung

Die Erfindung bezieht sich auf eine Vorrichtung zur Herstellung von Gebinden gemäß dem Oberbegriff des Patentanspruchs 1, wobei aus einem breitem Behälterstrom mittels Gassenteilung Behälter in mehrere einspurige Behälterströme umgewandelt werden, und mit mindestens einer Abteil- und/oder Verdichtereinheit zum Abteilen und Verdichten einer vorbestimmten Anzahl an Behältern jeweils zu dem späteren Gebinde zusammengefasst werden, wobei Auftragselemente vorgesehen sind, so dass zumindest einer der Behälter des Gebindes ein Haft- oder Klebemittel und/oder einen Haft- oder Klebemittelauftrag zumindest an einer Kontakt- oder Berührfläche aufweist.

Behälter im Sinne der Erfindung sind beispielsweise Flaschen, Dosen, Tuben, Pouches, jeweils aus Metall, Glas und/oder Kunststoff, also zum Beispiel auch PET-Flaschen, aber auch andere Packmittel, insbesondere solche, die zum Abfüllen von flüssigen oder viskosen Produkten geeignet sind, aber auch bereits zu Gruppen (Mehrfachpack) zusammen gefasste Behälter. Derartige Behälter, z.B. PET-Flaschen weisen einen Kontaktbereich auf, welcher sphärisch gewölbt ausgeführt ist, so dass die Behälter quasi aneinander um eine Umfangsbahn, also an einem "Abrollring" abrollen können. Bei Glasflaschen ist dies bei mehrmaligem Gebrauch der Flasche zum Beispiel mittels des meistens in heller Hervorhebung erkennbaren Abnutzungsringes erkennbar. Derartige "Abrollringe" können bei PET-Flaschen nicht nur im Kopfbereich, sondern auch im Fußbereich angeordnet sein.

Im Detail erfolgt die Herstellung der Gebinde z.B. in der Weise, dass die Behälter auf einer Transportebene eines Transporteurs aufstehend und mit ihrer Behälterachse in vertikaler Richtung oder im Wesentlichen vertikaler Richtung orientiert in einem Massentransport bzw. in einem breiten Behälterstrom zugeführt werden, in dem die Behälter hinsichtlich markanter Behälter und/oder Ausstattungsmerkmale eine willkürliche Orientierung aufweisen. Dieser breite Behälterstrom wird dann durch Gasseneinteilung in mehrere einspurige Behälterströme umgewandelt. In weiteren Verfahrensschritten erfolgt das Abteilen der die späteren Gebinde bzw. deren Behättergruppen bildenden Behälter aus den einspurigen Behalterströmen, das Zusammenführen der notwendigen Anzahl von Behältern jeweils zu einer verdichteten Behältergruppe, in der die Behälter mit mehreren Mantel- oder Umfangsflächen, also mit den Kontakt- oder Berührflächen gegeneinander anliegen, und dass Verbinden der Behälter jeder Behältergruppe zu dem kompakten und festen bzw. stabilen Gebinde.

Es ist bekannt, mehrere Artikel jeweils zu einer Artikelgruppe zusammen zu fassen oder zu formieren und aus den Artikelgruppen unter Verwendung von Schrumpffolien (z.B. US 7 726 464 A1) feste bzw. transportfähige Lager- und Transporteinheiten oder Gebinde herzustellen. Nachteilig ist hierbei unter anderem, dass die dabei verwendeten Folien sowie insbesondere das Aufschrumpfen der Folien durch Wärme- oder Energieeintrag nicht unerhebliche Kosten verursacht.

Vorgeschlagen wurde auch bereits, transportfähige Gebinde dadurch herzustellen, dass die jeweils zu einer Behältergruppe formierten Behälter durch eine die Behältergruppe schlaufenartig umgreifende Umreifung (DE 10 2009 025 824 A1, DE 10 2009 044 271 A1. DE 41 26 212 A1) verpackt, d.h. miteinander zu einem Gebinde verbunden werden, was eine besonders kostengünstige und einfache Möglichkeit zur Herstellung von Gebinden bzw. Transport- und Lagereinheiten darstellt. Die Umreifung kann auch mit den Behältern verklebt werden. Nachteilig bei der Umreifung ist allerdings, dass beim ersten Entnehmen eines Behälters aus einem solchen Gebinde die in dem Gebinde verbliebenen Behälter durch die Umreifung nicht mehr zusammengehalten werden. Dies gilt nicht nur dann, wenn die Umreifung getrennt oder zerschnitten wird, sondern auch dann, wenn es möglich ist, ohne Durchtrennen der Umreifung einen Behälter aus dem Gebinde zu entnehmen.

Weiterhin besteht beim Transport derartiger Gebinde auf einem Bandfördermittel immer die Gefahr, dass sich zylindrische oder weitgehend zylindrische Artikel, wie Dosen, Flaschen oder Behälter durch Vibration, Stöße etc. eine nestende Position einnehmen, also in die Lücke der Nachbarreihe rutschen. Um dies zu verhindern muss bei bekannten Gebinden eine sehr große Spannung auf die Umreifung gebracht werden.

Die DE 10 2006 037 105 A1 dagegen befasst sich mit einem Verfahren zum Zusammenstellen von Flaschenpaketen, bei welchem auf beiden Seiten einer Bahn ein Drehstern vorgesehen wird, welcher Flaschenhälse in Klammern an Flachträgern hineindrückt. Das Flaschenpaket wird noch mit einem Band oder einer Umhüllung (Folie) umfasst.

Gemäß der DE 23 31 193 wird an Behälter ein Klebemittel in schmalen Flächen oder Reihen angebracht, wobei jeweils benachbarte Flächen, welche nicht mit Klebemittel versehen sind, ein Greifen der Packung zum Zwecke des Tragens ermöglichen soll. An den Klebestellen kleben die Behälter aneinander. Die EP 2 096 039 A1 offenbart ebenfalls Behälter mit einem Klebemittel zu versehen, wobei aber zudem noch eine Schrumpffolie um das Flaschenpaket angeordnet wird.

EP-A-2 258 625 beschreibt eine Vorrichtung wobei Behälter mit Klebemittel versehen und zu Gebinden zusammengefügt werden.

Aufgabe der Erfindung ist es, eine Vorrichtung und ein Verfahren zum Herstellen von Gebinden der Eingangs genannten Art anzugeben, bei dem trotz des Verzichts auf eine umgreifende Folie und/oder trotz des Verzichts auf eine Umreifung in einfacher Weise stets vermieden ist, dass die Artikel bei dem Transport in eine nestende Position gelangen, wobei auch nach der Entnahme eines oder mehrerer Artikel aus einem Gebinde der Zusammenhalt der verbliebenen Artikel im Gebinde erhalten bleibt bzw. wieder hergestellt werden kann.

Zur Lösung dieser Aufgabe ist eine Vorrichtung zur Herstellung von Gebinden entsprechend dem Patentanspruch 1 vorgesehen, wobei ein Lineartransporteur vorgesehen ist, welcher angetrieben steuerbare Transportelemente aufweist, die jeweils entlang eines Führungselementes umlaufend sind, wobei jedes Transportelemente eine Kopfführung aufweist, welche relativ zum Transportelement axial beweglich und/oder rotierbar ist, wobei das Führungselement an seinem Hintrum einen parallel zu einer Zentralachse verlaufenden Mittelabschnitt aufweist, der in einen in Richtung zur Zentralachse orientierten Übergangsabschnitt übergeht, an dem sich ein parallel zur Zentralachse verlaufender Endabschnitt anschließt.

Behälter im Sinne der Erfindung sind, z.B. PET-Flaschen, d.h. u.a. Flaschen, Dosen Tuben, Pouches, jeweils aus Metall, Glas und/oder Kunststoff, aber auch andere Packmittel, insbesondere solche, die zum Abfüllen von flüssigen oder viskosen Produkten geeignet sind, aber auch bereits zu Gruppen (Mehrfachpack) zusammen gefasste Behälter. Die Behälter des Gebindes sind in nicht-nestender Position angeordnet.

"Haft- oder Klebemittel" in Sinne der Erfindung sind u.a. alle Materialien oder Massen, mit denen eine Klebeverbindung zwischen Behältern möglich ist, insbesondere Verbindungen, Materialien oder Massen, die im flüssigen oder zähflüssigen Zustand aufgebracht einen selbstklebenden Auftrag bilden und/oder unter Anwendung von Druck und/oder durch Energieeintrag und/oder nach einem Aushärten oder Vernetzen (auch durch Energieeintrag) eine Klebeverbindung bewirken. "Haft- oder Klebemittel" in Sinne der Erfindung sind u.a. auch Mehrschichtmaterialien, z.B. solche aus wenigstens einem Trägermaterial, welches mit einem Material beschichtet ist, mit dem eine Klebeverbindung zwischen Behältern möglich ist, also mindestens zweiseitig haftend- und/oder klebend aktiv sind. Solche Haft- oder Klebemittel können als Pads bezeichnet werden. Ein "klebender" Behälter weist im Sinne der Erfindung Haft- oder Klebemittel auf, bzw. ist mit einem Haft- und Klebemittelauftrag versehen. Das Haft- oder Klebemittel ist bevorzugt derart gewählt, dass die Behälter händisch und zerstörungsfrei aus dem Gebinde lösbar bzw. voneinander trennbar sind. Denkbar ist, dass flüssiges Klebemittel von den Auftragselementen aufgetragen wird. Möglich ist, wenn ein niedrigviskoser UV-aushärtender Klebstoff aufgetragen wird. Geeignet wäre auch ein Heißleim, welcher jedoch sehr schnell abkühlt, und so eventuell seine Klebeigenschaften aufgeben könnte, bevor die Behälter des Gebindes hinreichend miteinander verklebt sind. Ein UV-aushärtender Klebstoff ist auch vorteilhaft hinsichtlich der besonders leichten Einstellung seiner gewünschten Eigenschaften. Eine entsprechende Aushärtstation bzw. eine Aushärtstrecke ist in sinnvoller Weise stromab der Auftragselemente stationär oder entlang des Lineartransporteurs oberhalb bzw. gegebenenfalls auch unterhalb vorgesehen. Eine Aushärtstation kann zum Beispiel ein Tunnel mit UV-Ausleuchtung sein.

Zielführend ist, wenn die Transportelemente als vertikal ausgerichtete Schlitten ausgeführt sind, wobei jedes Transportelement separat von einer entsprechenden Steuereinheit ansteuerbar ist. Dies ist günstig im Sinne der Erfindung, da das jeweilige Transportelement so eine an die jeweilige Erfordernis angepasste Transportgeschwindigkeit haben kann.

Das Transportelement ist mittels eines Linearantriebs in der bevorzugten Ausgestaltung als elektromagnetischer Direktantrieb antreibbar steuerbar. Denkbar ist aber auch, jedes Transportelement mit einem separaten Antrieb in der beispielhaften Ausgestaltung als Servomotor auszuführen.

Das Führungselement kann auch als Führungsschiene bezeichnet werden, an welcher das Transportelement entlang bewegt wird. Das Führungselement weist den Hintrum und einen Rücktrum mit jeweils dazwischen angeordneten Umlenkabschnitten auf. wobei das Führungselement selbst natürlich keine Fördergeschwindigkeit aufweist. Lediglich die Transportelemente werden relativ zum Führungselement bewegt. Das Rücktrum ist bezogen auf das Hintrum bevorzugt seitlich desselben angeordnet.

Zweckmäßig ist, wenn jedes Transportelement einen einzigen Behälter vertikal ausgerichtet Transportiert. Mit den jeweiligen Kopfführungen werden die Behälter an dem Transportelement gehalten von der Eingangsseite an den Auftragselementen vorbei zur Ausgangsseite transportiert. In einer ersten Ausgestaltung können die Behälter kopfseitig gehalten frei schwebend transportiert werden. Denkbar ist auch ein Transport, bei welchen bodenseitig ein Förderband vorgesehen werden kann. Bevorzugt ist eine Ausgestaltung, bei welcher der jeweilige Behälter auf einer Aufstandsvorrichtung aufsteht und kopfseitig gehalten ist. Die Aufstandsvorrichtung kann relativ zum Transportelement axial beweglich und/oder rotierbar sein. Eingangsseitig werden die Behälter von einem Eingangsförderer übernommen. Ausgangsseitig werden die Behälter, mit Haft- und Klebemittel versehen, auf einen Ausgangsförderer übergeben. Der Eingangs- bzw. der Ausgangsförderer kann jeweils als Bandförderer ausgeführt sein.

Günstig ist, dass jede Kopfführung und jede optionale Aufstandsvorrichtung separat voneinander steuerbar ist. Die Kopfführungen können Pack- oder Zentriertulpen zum mündungsseitigen Halten der Behälter aufweisen. Die Aufstandsvorrichtungen können als Drehteller ausgeführt sein. Günstig ist, dass die Kopfführungen und/oder Aufstandsvorrichtungen relativ zum Transportelement also relativ zum Schlitten beweglich sind. So kann z.B. eine gezielte Ausrichtung der Behälter nach Gestaltungsmerkmalen, nach vorhandenen Etiketten oder ähnlichen Merkmalen durchgeführt werden, so dass die Behälter innerhalb des späteren Gebindes zueinander gleichausgerichtet sind. Dazu müssen lediglich die Kopfführunggen entsprechend angesteuert werden, wobei noch zweckmäßig ist, wenn jede Kopfführung bzw. Aufstandsvorrichtung separat, also unabhängig von den jeweils anderen steuerbar ist. Die Steuersignale bzw. Steuerbewegungen können von einer entsprechenden Steuereinheit, aber natürlich auch von der zentralen Steuereinheit veranlasst werden. Dabei könnte lediglich eine entsprechende Inspektionsvorrichtung vorgesehen werden, welche die Istposition der Behälter anhand der zu untersuchenden Merkmale, beispielsweise anhand der Etikettenposition erkennt, und entsprechender Abgleiche mit abgelegten Sollpositionen durchführt und sodann entsprechende Signale generiert. Günstig ist dabei, dass die Kopfführungen bzw. Aufstandsvorrichtungen (Drehteller) um Ihre Achse herum rotierbar sind, aber optional auch axialbeweglich sein können, wobei die Behälter natürlich auch freischwebend transportiert werden können. Durch die vorhandenen Freiheitsgrade können sich so verschiedene, erforderliche Positionsänderungen überlagern, so dass jeder Behälter im Einklang mit den anderen Behältern in die gewünschte Sollposition ausrichtbar ist. Durch den freischwebenden Transport können auf den Boden wirkende Reibwiderstände ausgeschlossen werden. Auf eine axiale Beweglichkeit der Kopfführung bzw. der Aufstandsvorrichtung kann verzichtet werden. Zweckmäßig ist, wenn die Transportelemente solche Abmessungen haben, dass die Behälter die Transportelemente überrage, also mit ihren Wänden über den Transportelementen überstehen. So können die Behälter durch Zusammenführen der Transportelemente aneinander anliegen.

Zweckmäßig ist, dass jedes Transportelement zu den jeweils anderen Transportelementen separat ansteuerbar ist. So kann das Transportelement unterschiedliche Geschwindigkeiten entlang seines Transportweges aufweisen. Insbesondere können die Transportelemente, welche den Rucktrumm erreicht haben hier eine höhere Geschwindigkeit aufweisen als die Transportelemente, welche sich noch entlang des Hintrums bewegen. So kann die Anzahl an Transportelementen im System vorteilhaft bezogen auf nicht geschwindigkeitessteuerbare Transportelemente verringert werden, da insbesondere entlang des Rücktrum eine zunächst höhere Geschwindigkeit angesteuert werden kann, wobei die Transportelemente im Bereich des Rücktrumendes in Wartestellung sein können. Entlang des Transportweges des Hintrums dagegen können die jeweiligen Transportelemente eine gleiche Geschwindigkeit zu einander haben. In bevorzugter Ausgestaltung kann vorgesehen sein, die Transportelemente im Hintrum mit unterschiedlichen Geschwindigkeiten anzusteuern. So können die Transportelemente im Hintrum eingangsseitig entlang eines Teilabschnittes des Mittelabschnittes zu dem Teilgebinde oder dem späteren Gebinde, also z.B. zu einer Gruppe von beispielhaft drei Transportelementen zusammengeführt werden. So kann zum Beispiel bereits eine Ausrichtung erfolgen. Entlang des weiteren Mittelabschnittes kann die zusammengeführte Gruppe getrennt werden, um z.B. ein versehen mit Haft- oder Klebemittel zu erleichtern, um die Gruppe anschließend mit Haft- oder Klebemittel versehen erneut zusammenzuführen.

In bevorzugter Ausgestaltung sind die Auftragselemente bzw. Auftragsstationen in Transportrichtung gesehen Im Mittelabschnitt vor dem Übergangsabschnitt angeordnet. Die Auftragselemente versehen den oder die Behälter mit Haft- oder Klebemittel, wobei die Behälter optional zueinander ausgerichtet durch Zusammenführen der Transportelemente gegeneinander bewegt werden können, da die Behälter mit ihren Kontakt- und Berührflächen das jeweilige Transportelement überragen, sodass bereits ein gewisser Anpressdruck erzeugbar ist, was einem Klebe- bzw. Haftverbund der Behälter aneinander zugute kommt.

In günstiger Ausgestaltung können in Transportrichtung gesehen aufeinander folgend mehrere Auftragselemente bzw. Auftragsstationen vorgesehen sein, was auch dem Umstand der optionalen Rotation des an der jeweiligen Pack- oder Zentriertulpe gehaltenen Behälters Rechnung trägt. Durch die Rotation der Behälter entlang der Transportrichtung könnten so in Umfangsrichtung der Behälter gesehen versetzte Kontakt- und Berührflächen mit Haft- oder Klebemittel versehen werden, was einen Klebeverbund begünstigt, da so quasi jeder Behälter zum direkt benachbarten Behälter an zumindest zwei Kontakt- und Berührflächen einen Klebeverbund eingehen kann.

In zweckmäßiger Ausgestaltung ist vorgesehen, dass der Übergangsabschnitt bezogen auf die Zentralachse gewölbt, bevorzugt hohlgewölbt ist. So kann ein besonders weicher Übergang von dem axial verlaufenden Mittelabschnitt zu dem zur Zentralachse parallel verlaufenden Endabschnitt erreicht werden. Durch den in Richtung zur Zentralachse orientierten Übergangsabschnitt kann der Endabschnitt näher an die Zentralachse geführt werden.

Das aus dem Lineartransporteur auslaufende Teilgebinde kann nachfolgend mit anderen Teilgebinden desselben Lineartransporteurs zu dem Gebinde zusammen geführt werden. So können Gebinde in einreihiger oder mehrreihiger Ausführung gebildet werden, was oben bereits angedeutet wurde. Das Zusammenführen kann an nachgeschalteten Vorrichtungen geschehen, wobei allerdings mit Haft- und Klebemittel versehene Teilgebinde bzw. Behälter möglichst zeitnah vor einer eventuellen Aushärte- und/oder Abbindestation zusammengeführt werden sollten.

Zielführend ist weiter, wenn zwei identisch ausgeführte Lineartransporteure vorgesehen sind, welche bezogen auf die Zentralachse spiegelbildlich gegenüberliegend angeordnet sind. Die Auftragselemente sind zwischen beiden Mittelabschnitten angeordnet. Günstig bei dieser Ausgestaltung ist, dass die jeweiligen Teilgebinde der jeweiligen Lineartransporteure bereits im jeweiligen Endabschnitt zu einem Gebinde zusammengeführt werden können, da die Endabschnitte einander hinreichend angenähert sind, um einen Klebeverbund positiv zu beeinflussen. Dazu kann eine Kraft aufgebracht werden, welche die Behälter in allen günstigen Richtungen aneinander presst bzw. drückt, so dass z.B. ei n zweireihiges Gebinde mit sechs Behältern gebildet ist.

Das Teilgebinde kann z.B. aus drei oder sechs Behältern gebildet sein. Dabei kann von den Kopfführungen bzw. von den Aufstandsvorrichtungen, wie bereits oben angedeutet, eine Kraft quer und längs zur Transportrichtung ausgeübt werden, so dass die betreffenden Behälter eines Gebindes unter Krafteinwirkung gegeneinander gedrückt bzw. gepresst werden, was den Klebverbund positiv beeinflusst. Dazu könnten die Kopfführungen usw. weiter angenähert werden, um die wirkende Druckkraft zu erhöhen.

Mit zwei Lineartransporteuren sind eingangsseitig zwei separate Eingasströme aufzunehmen wobei ausgangsseitig zwei separate Ausgangsströme oder ein Ausgangsstrom absetzbar ist, wenn endabschnittsseitig kein Zusammenführen der beiden Teilgebinde vorgesehen sein sollte.

Wird UV-aushärtender Klebstoff aufgetragen, kann eine Aushärtestation oder -strecke vorgesehen sein. Die Aushärtestation kann endabschnittsseitig angeordnet sein, wobei auch ein Tunnel mit UV-Ausleuchtung denkbar ist. Um den Transport der Gesamtgebinde in Richtung zur Austragsseite zu unterstützen, könnten auch Ausgangsförderer Mitnehmerelemente vorgesehen werden.

Das jeweilige Gebinde kann in Transportrichtung gesehen einreihig, mehrreihig, also beispielhaft zweireihig oder z.B. dreireihig ausgeführt sein. Möglich ist die Auftragelemente bzw. Auftragsstationen nicht nur starr an dem Lineartransporteur anzuordnen, sondern ebenfalls beweglich, so dass die Auftragelemente zumindest eine Teilstrecke entlang mit dem jeweiligen Behälterstrom mitgeführt werden könnten.

Möglich ist, das Gebinde, also das jeweilige Gesamtgebinde noch mit einem Trageelement, beispielsweise mit einem Griff zu versehen, wozu geeignete Vorrichtungen vorgesehen werden können, welche stromab der Ausgangsseite oder an geeigneter Stelle an dem Lineartransporteur angeordnet ist. Natürlich kann das Tragelement mit dem zuvor genannten Haft- oder Klebemittel an dem Gebinde befestigt werden.

Mit der Erfindung wird so eine Vorrichtung zur Herstellung eines Gebindes zur Verfügung gestellt, welche trotz des Verzichts auf eine umgreifende Folie und/oder trotz des Verzichts auf eine Umreifung in einfacher Weise vermeidet, dass die Behälter bei dem Transport in eine nestende Position gelangen, wobei auch nach der Entnahme eines oder mehrerer Behälter aus einem Gebinde der Zusammenhalt der verbliebenen Behälter im Gebinde erhalten bleibt bzw. wieder hergestellt werden kann. Durch den Verzicht auf eine Folie oder ein Umreifungsband (folienloser Flaschenpack), wird die Umwelt durch Vermeidung von Abfall entlastet, wobei so auch Ressourcen zur Herstellung der meist aus Kunststoff hergestellten Folien oder Unreifungen geschont werden. Die Behälter eines Gebindes werden während des Transportes, also im kontinuierlichen Betrieb der Vorrichtung zur Herstellung von Gebinden, bzw. der Verpackungsmaschine direkt aneinander geklebt. Zudem ist ein folienloser Flaschenpack bei minimalem Klebemittelauftrag erreichbar, welcher eine hinreichende Bindung der einzelnen Behälter zueinander aufweist.

Mit der Erfindung sind extrem hohe Leistungen erreichbar, was unter anderen auch auf die beliebig steuerbare Geschwindigkeit der Transportelemente zurückzuführen ist, welche hinsichtlich Beschleunigung bzw. Verzögerung einstellbar steuerbar sind.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:
- Fig. 1: einen Teilabschnitt einer Vorrichtung zum Herstellen eines Gebindes in einer Aufsicht,
- Fig. 2: einen Vergrößerten Teilabschnitt aus Figur 1 in einer Seitenansicht mit zusammengeführten Transportelementen, und
- Fig. 3: Formatbeispiele von Gebinden in einer Aufsicht.

In den unterschiedlichen Figuren sind gleiche Teile stets mit denselben Bezugszeichen versehen, weswegen diese in der Regel auch nur einmal beschrieben werden.

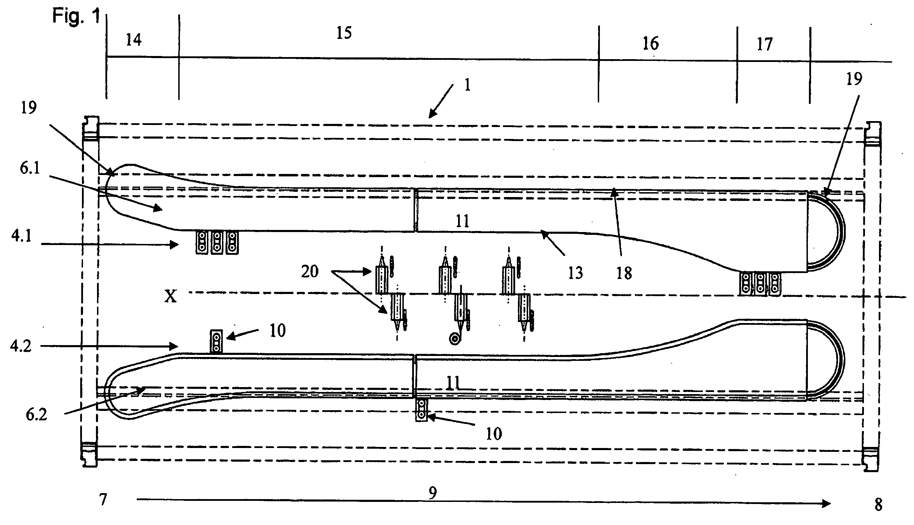

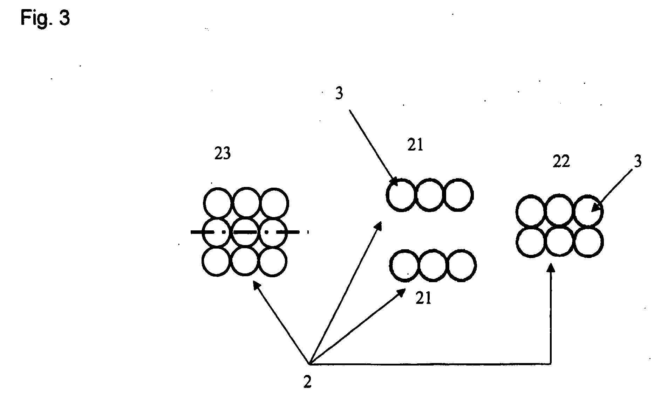

Figur 1 zeigt einen Teilabschnitt einer Vorrichtung 1 zur Herstellung von Gebinden 2 (Figur 3) aus Behältern 3, bzw. einer Verpackungsmaschine 1, wobei im Vorfeld aus einem breitem Behälterstrom Behälter 3 in mehrere, wie dargestellt beispielhaft in zwei zweispurige Behälterströme 4.1 und 4.2 umgewandelt werden, in welchem die Behälter 3 beispielsweise bezuglich ihrer Behälter - und/oder Ausstattungsmerkmale eine willkürliche Orientierung aufweisen, durch Abtrennen und Zusammenführen einer vorbestimmten Anzahl an Behältern 3, also beispielsweise jeweils drei Behälter 3, verdichtete oder formierte Behältergruppen 5.1 und 5.2 oder Teilgebinde 5.1 und 5.2 gebildet und nachfolgend jeweils zu dem Gebinde 2 zusammengefasst werden, wobei zumindest einer der Behälter 3 des Gebindes 2, bevorzugt jeder Behälter 3 ein Haft- oder Klebemittel und/oder einen Haft- oder Klebemittelauftrag zumindest an einer Kontakt- oder Berührfläche aufweist. Von dem Teilgebinde 5.2 ist beispielhaft nur ein Element dargestellt. Die Behälterströme 4.1 und 4.2 sind in Figur 1 prinzipiell als Pfeile dargestellt.

Figur 1 zeigt, dass zwei identische Lineartransporteure 6 bzw. 6.1 und 6.2 vorgesehen sind, welche die Behälter 3 von einer Eingangsseite 7 in Richtung zu einer Ausgangsseite 8 transportieren. Die Transportrichtung von der Eingangsseite 7 zur Austragsseite 8 ist mittels des Pfeils 9 dargestellt. Die Lineartransporteure 6 sind bezogen auf eine Zentralachse X spiegelbildlich gegenüberliegend angeordnet.

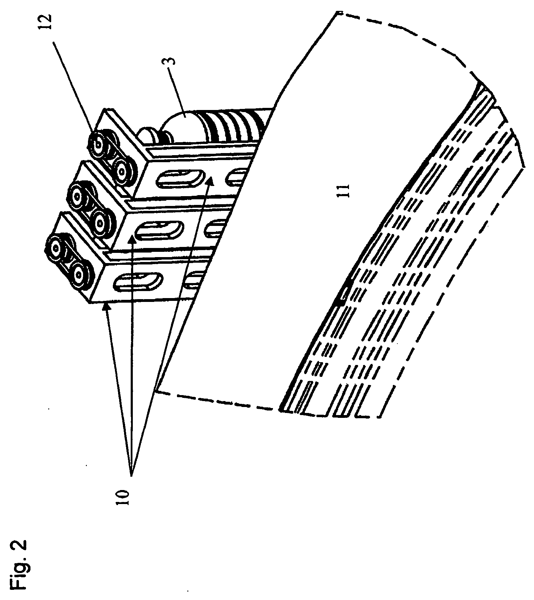

Der Lineartransporteur 6 weist angetrieben steuerbare Transportelemente 10 auf, die jeweils entlang eines Führungselementes 11 umlaufend sind, wobei jedes Transportelement 10 eine nicht erkennbare Kopfführung und eine Aufstandsvorrichtung aufweist, welche als Drehteller ausgeführt sein kann. Die Kopfführung kann eine Pack- und Zentriertulpe aufweisen, welchen den Behälter 3 mündungsseitig hält. Zumindest die Kopfführung eines jeden Transportelementes 10 ist relativ zu diesem axial beweglich und/oder rotierbar, was in Figur 2 mittels des beispielhaft kopfseitig angeordneten Riementriebes 12 angedeutet ist, welcher eine Rotation bewirken kann. Gleiches kann für den Drehteller gelten, welcher auch nur rotierbar ausführbar sein kann. Die Transportelemente 10 sind so ausgeführt, dass der Behälter 3 das jeweilige Transportelement 10 überragt, also über das Transportelement 10 übersteht, so dass auf eine axiale Beweglichkeit auch verzichtet werden kann. Ein Aneinanderpressen der Behälter 3 kann so einfach durch Zusammenführen der Transportelemente 10 bewirkt werden. Werden Behälter 3 mit veränderten Abmessungen bearbeitet, ist ein Formatwechsel leicht und ohne Komplikationen durchführbar, wobei die auszutauschenden Transportelemente 10 entsprechend angepasste Abmessungen aufweisen.

Das jeweilige Führungselement 11 weist in Transportrichtung 9 gesehen an seinem Hintrum 13 aufeinander folgend einen Eingangsabschnitt 14, einen Mittelabschnitt 15, einen Übergangsabschnitt 16 und einen Endabschnitt 17 auf. Der Mittelabschnitt 15 erstreckt sich parallel zu der Zentralachse X in Richtung zum Übergangsabschnitt 16. Der Übergangsabschnitt 16 ist bezogen auf die Zentralachse X gewölbt, beispielhaft hohlgewölbt ausgeführt und ist in seinem Verlauf zum Endabschnitt 17 hin in Richtung zur Zentralachse X orientiert. Der Endabschnitt 17 ist wiederum parallel zur Zentralachse X verlaufend ausgeführt.

Beispielhaft sind beide Übergangsabschnitte 16 in ihrem Verlauf aufeinander zu geführt, so dass die Endabschnitte 17 einen geringeren Abstand zur Zentralachse X aufweisen als die jeweiligen Mittelabschnitte 17. Die Eingangsabschnitte 14 sind jeweils so ausgeführt, dass in Aufsicht gesehen ein trichterartiger Einlaufbereich gebildet ist.

Das Führungselement 11 hat ersichtlich einen Rucktrumm 18, wobei Umlenkabschnitte 19 zwischen dem Rücktrum 18 und dem Hintrum 13 angeordnet sind.

Die Transportelemente 10 sind als vertikal ausgerichtete Schlitten ausgeführt, welche jeweils separat und unabhängig von den jeweils anderen steuerbar antreibbar sind. Beispielhaft sind die Transportelemente 10 mittels eines Linearantriebs in der Ausgestaltung als elektromagnetischer Direktantrieb antreibbar steuerbar.

Jedes Transportelement transportiert jeweils einen einzigen Behälter 3, wobei der Behälter 3 vertikal ausgerichtet ist, und mit seiner Wand, das Transportelement 10, insbesondere im Bereich der Kontakt- und Berührfläche überragt.

Wie bereist gesagt, ist jedes Transportelement 10 zu den jeweils anderen Transportelementen 10 separat ansteuerbar. So kann das Transportelement 10 unterschiedliche Geschwindigkeiten entlang seines Transportweges aufweisen. Insbesondere können die Transportelemente 10, welche den Rucktrumm 18 erreicht haben hier eine höhere Geschwindigkeit aufweisen als die Transportelemente 10, welche sich noch entlang des Hintrums 13 bewegen. So kann die Anzahl an Transportelementen 10 im System vorteilhaft bezogen auf nicht geschwindigkeitessteuerbare Transportelemente 10 verringert werden, da insbesondere entlang des Rücktrum 18 eine zunächst höhere Geschwindigkeit angesteuert werden kann, wobei die Transportelemente 10 im Bereich des Rücktrumendes in Wartestellung sein können. Entlang des Transportweges des Hintrums 13 dagegen können die jeweiligen Transportelemente 10 eine gleiche Geschwindigkeit zu einander haben. In bevorzugter Ausgestaltung kann vorgesehen sein, die Transportelemente 10 im Hintrum 13 mit unterschiedlichen Geschwindigkeiten anzusteuern. So können die Transportelemente 10 im Hintrum 13 eingangsseitig entlang eines Teilabschnittes des Mittelabschnittes 15 zu dem Teilgebinde 5.1, also z.B. zu einer Gruppe von beispielhaft drei Transportelementen 10 zusammengeführt werden. Hier kann sinnvoller Weise zum Beispiel bereits eine Ausrichtung erfolgen. Entlang des weiteren Mittelabschnittes 15 kann die zusammengeführte Gruppe getrennt werden, um z.B. ein Versehen mit Haft- oder Klebemittel zu erleichtern, um die Gruppe anschließend mit Haft- oder Klebemittel versehen, optional ausgerichtet erneut zusammenzuführen, was in dem Endabschnitt 17 des Linearförderers 6.1 erkennbar ist.

Eine Ausrichtung der Behälter 3 kann in Transportrichtung 9 gesehen stromauf von Auftragselemente bzw. Auftragsstationen 20 zum Auftragen des Haftund Klebemittels erfolgen. In bevorzugter Ausgestaltung sind die Auftragselemente bzw. Auftragsstationen 20 in Transportrichtung gesehen im Mittelabschnitt 15 vor dem Übergangsabschnitt 16 angeordnet. Die Auftragselemente 20 versehen den oder die Behälter 3 mit Haft- oder Klebemittel, wobei die Behälter 3 optional zueinander ausgerichtet durch Zusammenführen der Transportelemente 10 gegeneinander bewegt werden können, da die Behälter 3 mit ihren Kontakt- und Berührflächen das jeweilige Transportelement 10 in Umfangsrichtung überragen, sodass bereits ein gewisser Anpressdruck erzeugbar ist, was einem Klebe- bzw. Haftverbund der Behälter 3 aneinander zugute kommt.

Wie beispielhaft dargestellt, können in Transportrichtung 9 gesehen an jedem Lineartransporteur 6.1 und 6.2 aufeinander folgend mehrere z.B. jeweils drei Auftragselemente bzw. Auftragsstationen 20 vorgesehen sein, was auch dem Umstand der optionalen Rotation des an der jeweiligen Pack- oder Zentriertulpe gehaltenen Behälters Rechnung trägt. Durch die Rotation der Behälter 3 entlang der Transportrichtung 9 könnten so in Umfangsrichtung der Behälter 3 gesehen versetzte Kontakt- und Berührflächen mit Haft- oder Klebemittel versehen werden, was einen Klebeverbund begünstigt, da so quasi jeder Behälter 3 zum direkt benachbarten Behälter 3 an zumindest zwei Kontakt- und Berührflächen einen Klebeverbund eingehen kann.

Nicht beschränkende Formatbeispiele an Gebinden 21, 22 und 23 sind in Figur 3 dargerstellt. Mit den beiden Lineartransporteuren 6.1 und 6.2 können Gebinde in unterschiedlichster Ausgestaltung gebildet werden. So können mehrere z.B. drei Behälter 3 von jedem Lineartransporteur 6.1 und 6.2 zu einem Teilgebinde (Gebinde 21) zusammengefasst werden, welche so weitertransportiert und/oder nachfolgend zu einem Gebinde verarbeitet werden können, wobei das Gebinde 21,22, oder 23 dann aus mehreren z.B. aus zwei (Gebinde 22) oder auch aus drei Teilgebinden (Gebinde 23) gebildet werden kann. Die günstige Ausgestaltung und Anordnung der beiden identischen Lineartransporteure 6.1 und 6.2 zueinander erlaubt zielführend eine Zusammenführung und Vereinigung von Teilgebinden im jeweiligen Endabschnitt 17, indem die beiden zusammenzuführenden Teilgebinde, bzw. deren Behälter 3 mit Ihrem Umfang nicht nur die Transportelemente 10, sondern auch die Zentralachse X überragen können, so dass die Behälter 3 der beiden Teilgebinde unter Krafteinwirkung zusammengefügt werden können (z.B. Gebinde 22 Figur 3).

An dem Eingangsabschnitt 14 können Inspektionsvorrichtungen zum Ausrichten der Behälter 3 vorgesehen sein, wobei die Behälter 3 In dem Transportelement 10 gehalten ausgerichtet werden, so dass Behälter 3 in dem Gebinde gleich ausgerichtet sein können.

### Bezugszeichenliste:

- 1: Vorrichtung zur Herstellung von Gebinden/Verpackungsmaschine
- 2: Gebinde
- 3: Behälter
- 4: Behälterspur (4.1 und 4.2)
- 5: Teilgebinde (5.1 und 5.2)
- 6: Lineartransporteur (6.1 und 6.2)
- 7: Eingangsseite
- 8: Ausgangsseite
- 9: Transportrichtung
- 10: Transportelemente
- 11: Führungselemente
- 12: Riementrieb
- 13: Hintrum
- 14: Eingangsabschnitt
- 15: Mittelabschnitt
- 16: Übergangsabschnitt
- 17: Endabschnitt
- 18: Rücktrum
- 19: Umlenkabschnitt
- 20: Auftragselemente/Auftragsstation
- 21: Formatbeispiel Gebinde
- 22: Formatbeispiel Gebinde
- 23: Formatbeispiel Gebinde

## Patentansprüche

1. Vorrichtung zur Herstellung von Gebinden (2), wobei aus einem breitem Behälterstrom mittels Gassenteilung Behälter (3) in mehrere einspurige Behälterströme (4.1 und 4.2) umgewandelt werden, und mit mindestens einer Abteil- und/oder Verdichtereinheit zum Abteilen und Verdichten einer vorbestimmten Anzahl an Behältern (3) Teilgebinde (5.1 und 5.2) gebildet und nachfolgend jeweils zu dem späteren Gebinde (2) zusammengefasst werden, wobei Auftragselemente (20) vorgesehen sind, so dass zumindest einer der Behälter (3) des Gebindes (2; 5.1, 5.2) ein Haft- oder Klebemittel und/oder einen Haft- oder Klebemittelauftrag zumindest an einer Kontakt- oder Berührfläche aufweist, **gekennzeichnet durch** einen Lineartransporteur (6, 6.1, 6.2), welcher angetrieben steuerbare Transportelemente (10) aufweist, die entlang eines Führungselementes (11) umlaufend sind, wobei jedes Transportelement (10) eine Behälterführung aufweist, insbesondere eine Kopfführung, welche relativ zum Transportelement (10) zumindest rotierbar ist, wobei das Führungselement (11) an seinem Hintrum (13) einen ersten Abstand zu einer Zentralachse (X) verlaufenden Mittelabschnitt (15) aufweist, der in einen in Richtung zur Zentralachse (X) orientierten Übergangsabschnitt (16) übergeht, an den sich ein, parallel zur Zentralachse (X) verlaufender Endabschnitt (17) anschließt, insb. derart dass Behälter (3) in Kontakt mit Haft- und/oder Klebemittelaufträge auf den Oberflächen quer zur Transportrichtung benachbarter Behälter (3) kommen, und wobei das Rücktrum bezogen auf das Hintrum seitlich desselben angeordnet ist.

2. Vorrichtung nach Anspruch 1, **dadurch gekennzeichnet, dass** jedes Transportelement (10) als vertikal ausgerichteter Schlitten ausgeführt sind.

3. Vorrichtung nach Anspruch 1 oder 2, **dadurch gekennzeichnet, dass** jedes Transportelemente (10) separat und unabhängig von den jeweils anderen steuerbar antreibbar ist.

4. Vorrichtung nach einem der vorhergehenden Ansprüche, **dadurch gekennzeichnet, dass** das Transportelement (10) mittels einem Linearabtrieb in der Ausgestaltung als elektromagnetischer Direktantrieb antreibbar steuerbar ist.

5. Vorrichtung nach einem der vorhergehenden Ansprüche, **dadurch gekennzeichnet, dass** das Führungselement (11) den Hintrum (13) und einen Rucktrumm (18) aufweist, zwischen denen jeweils ein Umlenkabschnitt (19) angeordnet ist.

6. Vorrichtung nach einem der vorhergehenden Ansprüche, **dadurch gekennzeichnet, dass** jedes Transportelement (10) einen einzigen Behälter (3) vertikal ausgerichtet transportiert.

7. Vorrichtung nach einem der vorhergehenden Ansprüche, **dadurch gekennzeichnet, dass** die Behälter (3) mittels des Transportelementes (10) kopfseitig gehalten freischwebend oder auf einem Förderer aufstehend zumindest entlang eines Teilabschnittes transportiert werden.

8. Vorrichtung nach einem der vorhergehenden Ansprüche, **dadurch gekennzeichnet, dass** das Transportelement (10) die Kopfführung und eine Aufstandsvorrichtung für den Behälter aufweist, welche Aufstandsvorrichtung als Drehteller ausgeführt ist, wobei jede Kopfführung und/oder jede Aufstandsvorrichtung unabhängig voneinander ansteuerbar ist, wobei die Aufstandsvorrichtung relativ zum Transportelement (10) zumindest rotierbar Ist

9. Vorrichtung nach einem der vorhergehenden Ansprüche, **dadurch gekennzeichnet, dass** der Übergangsabschnitt (16) bezogen auf die Zentralachse (X) gewölbt, bevorzugt hohlgewölbt ausgeführt.

10. Vorrichtung nach einem der vorhergehenden Ansprüche, **gekennzeichnet durch** zwei identisch ausgeführte Lineartransporteure (6.1 und 6.2) welche bezogen auf die Zentralachse (X) gegenüberliegend angeordnet sind, wobei die Auftragselemente (20) zwischen den einander gegenüberliegenden Mittelabschnitten (15) angeordnet sind.

11. Vorrichtung nach Anspruch 10, **gekennzeichnet dadurch, dass** die zwei Line-artransporteur (6.1, 6.2) in ihrem Abstand verstellbar bzw. verfahrbar sind.

## Claims

1. Device for forming bundles (2), wherein containers (3), coming from a wide stream of containers, are converted into multiple one-lane streams of containers (4.1 and 4.2), and partial packaged units (5.1 and 5.2) are formed by means of at least one separation and/or compacting unit for separating and compacting a predetermined number of containers (3), and then are respectively combined to form the subsequent bundle (2), wherein application elements (20) are included such that at least one of the containers (3) of the bundle (2; 5.1, 5.2) has an adhesive or glue and/or an adhesive or glue applied on at least one contact surface, **characterised by** a linear conveyor (6, 6.1, 6.2) which has driven controllable conveying elements (10) which circulate along a guide element (11), wherein each conveying element (10) has a container guide, in particular a top guide, that is at least rotatable relative to the conveying element (10), wherein the guide element (11) has, on its feed strand (13), a central section (15) running at a first spacing interval to a central axis (X), which merges into a transition section (16) oriented in the direction towards the central axis (X), which is followed by an end section (17) extending parallel to the central axis (X), in particular in such a way that containers (3) come in contact with adhesive and/or glue applications on the surfaces of adjacent containers (3) transverse to the conveying direction, and wherein the return strand is arranged related to the feed strand such as to be beside it.

2. Device according to claim 1, **characterised in that** each conveying element (10) is configured as a vertically aligned carriage.

3. Device according to claim 1 or 2, **characterised in that** each conveying element (10) can be driven in a controllable manner separately and independently of the others in each case.

4. Device according to any one of the preceding claims, **characterised in that** the conveying element (10) can be driven in a controllable manner by means of a linear drive in the embodiment of an electromagnetic direct drive.

5. Device according to any one of the preceding claims, **characterised in that** the guide element (11) comprises the feed strand (13) and a return strand (18), between which a deflection section (19) is arranged in each case.

6. Device according to any one of the preceding claims, **characterised in that** each conveying element (10) is conveyed aligned vertically to an individual container (3).

7. Device according to any one of the preceding claims, **characterised in that** the containers (3) are conveyed by means of the conveying element (10) held on the head side suspended freely or standing upright on a conveyor at least along a part section.

8. Device according to any one of the preceding claims, **characterised in that** the conveying element (10) comprises the top guide and a stand device for the container, said stand device being configured as a rotating plate, wherein each top guide and/or each stand device can be controlled independently of one another, wherein the stand device can at least be rotated relative to the conveying element (10).

9. Device according to any one of the preceding claims, **characterised in that** the transition section (16) is configured as cambered in relation to the central axis (X), preferably hollow cambered.

10. Device according to any one of the preceding claims, **characterised by** two identically configured linear conveyors (6.1 and 6.2), which are arranged opposite one another in relation to the central axis (X), wherein the application elements (20) are arranged between the mutually opposed middle sections (15).

11. Device according to claim 10, **characterised in that** the two linear conveyors (6.1, 6.2) can be adjusted or can be moved in their spacing interval.

## Revendications

1. Dispositif de fabrication d'emballages (2), des récipients (3) étant transformés en plusieurs flux de récipient (4.1 et 4.2) à une voie à partir d'un flux de récipient large par séparation en voies, et, avec au moins une unité de séparation et/ou de compactage pour la séparation et le compactage d'un nombre prédéterminé de récipients (3), des emballages partiels (5.1 et 5.2) étant formés et réunis par la suite respectivement pour former l'emballage ultérieur (2), des éléments d'application (20) étant prévus de sorte qu'au moins l'un des récipients (3) de l'emballage (2; 5.1, 5.2) présente un moyen d'adhérence ou de collage et/ou une application de moyen d'adhérence ou de collage au moins sur une surface de contact ou de toucher, **caractérisé par** un transporteur linéaire (6, 6.1, 6.2) qui présente des éléments de transport (10) à commande entraînée qui tournent le long d'un élément de guidage (11),
chaque élément de transport (10) présentant un guidage de récipient, en particulier un guidage de tête qui est rotatif au moins par rapport à l'élément de transport (10), l'élément de guidage (11) présentant sur son tronçon aller (13) une première distance de la section médiane (15) s'étendant par rapport à un axe central (X), qui passe dans une section de transition (16) orientée en direction de l'axe central (X), à laquelle est contiguë une section d'extrémité (17) s'étendant parallèlement à l'axe central (X), en particulier de telle manière que des récipients (3) viennent en contact avec des applications de moyen d'adhérence et/ou de collage sur les surfaces transversalement au sens de transport de récipients contigus (3), et le tronçon retour étant agencé par rapport au tronçon aller latéralement à celui-ci.

2. Dispositif selon la revendication 1, **caractérisé en ce que** chaque élément de transport (10) est réalisé comme un chariot orienté verticalement.

3. Dispositif selon la revendication 1 ou 2, **caractérisé en ce que** chaque élément de transport (10) peut être entraîné en pouvant être commandé séparément et indépendamment respectivement des autres.

4. Dispositif selon l'une quelconque des revendications précédentes, **caractérisé en ce que** l'élément de transport (10) peut être commandé en étant entraînable à l'aide d'un entraînement linéaire dans la configuration comme entraînement direct électromagnétique.

5. Dispositif selon l'une quelconque des revendications précédentes, **caractérisé en ce que** l'élément de guidage (11) présente le tronçon aller (13) et un tronçon retour (18), entre lesquels respectivement une section de renvoi (19) est agencée.

6. Dispositif selon l'une quelconque des revendications précédentes, **caractérisé en ce que** chaque élément de transport (10) transporte orienté verticalement un seul récipient (3).

7. Dispositif selon l'une quelconque des revendications précédentes, **caractérisé en ce que** les récipients (3) sont transportés maintenus en suspension côté tête à l'aide de l'élément de transport (10) ou debout sur un transporteur au moins le long d'une section partielle.

8. Dispositif selon l'une quelconque des revendications précédentes, **caractérisé en ce que** l'élément de transport (10) présente le guidage de tête et un dispositif de soulèvement pour le récipient, lequel dispositif de soulèvement est réalisé comme un plateau tournant, chaque guidage de tête et/ou chaque dispositif de soulèvement étant commandable indépendamment l'un de l'autre, le dispositif de soulèvement étant rotatif au moins par rapport à l'élément de transport (10).

9. Dispositif selon l'une quelconque des revendications précédentes, **caractérisé en ce que** la section de transition (16) est réalisée courbée par rapport à l'axe central (X), de préférence courbée et creuse.

10. Dispositif selon l'une quelconque des revendications précédentes, **caractérisé par** deux transporteurs linéaires (6.1 et 6.2) réalisés identiques qui sont agencés en regard par rapport à l'axe central (X), les éléments d'application (20) étant agencés entre les sections médianes (15) en regard l'une de l'autre.

11. Dispositif selon la revendication 10, **caractérisé en ce que** la distance entre les deux transporteurs linéaires (6.1, 6.2) est réglable ou déplaçable.
